# EUROPÄISCHE PATENTSCHRIFT

(11) **EP 0 562 436 B1**
(45) Veröffentlichungstag und Bekanntmachung des Hinweises auf die Patenterteilung: **29.01.1997**
(21) Anmeldenummer: 93104335.0
(22) Anmeldetag: 17.03.1993
(51) Int. Cl.: C08G 18/12, C08G 18/08, C09D 175/04

(54) **Wasserverdünnbare Zweikomponenten-Überzugsmasse, ein Verfahren zu deren Herstellung und deren Verwendung**
Water-dilutable two-component coating composition, process for its preparation and its use
Composition de revêtement diluable à deux composants, procédé de sa préparation et son utilisation

(30) Priorität: 25.03.1992 DE 4209677; 04.06.1992 DE 4218449
(43) Veröffentlichungstag der Anmeldung: 29.09.1993
(73) Patentinhaber: HOECHST AKTIENGESELLSCHAFT, 65926 Frankfurt am Main (DE)
(72) Erfinder: Schwab, Michael, Dr., W-6272 Niedernhausen-Oberjosbach (DE); Frank, Udo, Dr., W-6507 Ingelheim (DE); Walz, Gerd, Dr., W-6200 Wiesbaden (DE)

(56) Entgegenhaltungen:
- EP-A- 0 436 941
- EP-A- 0 469 389
- EP-A- 0 496 205
- WO-A-92/16576
- DE-A- 3 903 804
- US-A- 4 791 168

## Beschreibung

Die Erfindung betrifft eine wasserverdünnbare Zweikomponenten-Überzugsmasse auf Basis von Polyurethanharzen, ein Verfahren zu deren Herstellung und deren Verwendung als Beschichtungsmittel.

Die Umstellung von konventionellen Lacken auf wasserverdünnbare Systeme ist in vollem Gange. Insbesondere bei 1-Komponenten-Systemen hat die Ablösung konventioneller Bindemittel durch wäßrige bereits deutliche Fortschritte gemacht.

Schwierig gestaltet sich der Ersatz lösungsmittelhaltiger Bindemittel in hochwertigen 2-Komponenten-Systemen. Insbesondere bei chemisch vernetzenden Polyurethanlacken, die aufgrund ihrer hervorragenden Eigenschaften auf dem Beschichtungssektor eine große Bedeutung haben, konnte auf organische Lösemittel bisher nicht verzichtet werden. Die Verwendung wäßriger Bindemittel schien problematisch, da die als Härter eingesetzten Polyisocyanat-Verbindungen mit Wasser unter Bildung von N-substituierten Polyharnstoff-Verbindungen und Abspaltung von Kohlendioxid reagieren.

Aus der EP 0 358 979 ist bekannt, daß spezielle Polyhydroxypolyacrylate in der Lage sind, die Polyisocyanathärter in Wasser zu emulgieren und zu vernetzenden Filmen auszuhärten.

Zwei-Komponenten-Dispersionen auf der Basis von Polyurethanen und Polyisocyanaten sind bereits aus EP-A-0 469 389 bekannt. Die darin als zweite Komponente enthaltenen Polyisocyanate müssen jedoch als solche in Wasser dispergierbar sein. Diese Dispergierbarkeit in Wasser wird erreicht durch Modifizierung der Polyisocyanate mit hydrophilen Ethylenoxidgruppen und anionischen Gruppen. Es wurde nun überraschend gefunden, daß bei solchen Zwei-Komponenten-Systemen auf Basis von Polyurethanen und Polyisocyanaten die Polyisocyanatkomponente nicht hydrophil modifiziert sein muß, oder mit anderen Worten, man kann hierbei auch unmittelbar die nicht in Wasser dispergierbaren Polyisocyanate einsetzen.

Überraschenderweise wurde jetzt gefunden, daß ausgewählte, nachstehend näher beschriebene wasserverdünnbare Polyurethanharze besonders günstige Kombinationspartner mit ausgezeichneter Emulgatorwirkung für nicht blockierte, an sich nicht wasserdispergierbare Polyisocyanathärter darstellen. Solche Polyurethanharze sind teilweise in der Europäischen Offenlegungsschrift 355 682 beschrieben, dort ist allerdings ausschließlich die Verwendung in Einkomponenten-Füllerzusammensetzungen offenbart. Die auf diesen Harzen basierenden wäßrigen 2-Komponenten-Polyurethanlacke trocknen zu harten, vernetzten und störungsfreien Filmen aus, die in ihrem Eigenschaftsniveau den konventionellen 2-Komponenten- Polyurethanlacken entsprechen.

Gegenstand der Erfindung ist daher eine wasserverdünnbare Zweikomponenten-Überzugsmasse, enthaltend
a) eine nicht hydrophil modifizierte Polyisocyanatkomponente, bestehend aus einem oder mehreren organischen Polyisocyanaten, und
b) ein Polyurethanharz mit einer Hydroxylzahl von 30 bis 200 mg/g, dargestellt durch
   1. Umsetzung von
      (A) Polyisocyanaten mit
      (B) Polyolen mit einer zahlenmittleren molaren Masse Mₙ von mindestens 400 g/mol,
      (C) gegebenenfalls niedermolekularen Polyolen mit einer molaren Masse von 60 bis 400 g/mol, und
      (D) Verbindungen, die mindestens zwei gegenüber Isocyanatgruppen reaktive Gruppen und mindestens eine zur Anionenbildung befähigte Gruppe aufweisen,
      zu einem freie NCO-Gruppen enthaltenden Präpolymeren und
   2. Umsetzung des in Schritt 1 dargestellten Präpolymeren mit mindestens einer der Komponenten:
      (E) niedermolekulare Polyole mit einer molaren Masse von 60 bis 400 g/mol und mindestens drei Hydroxylgruppen pro Molekül, die gegenüber Isocyanatgruppen keine weiteren reaktiven Gruppen tragen, wobei diese Verbindungen im Überschuß eingesetzt werden,
      (F) Verbindungen, die monofunktionell sind oder aktiven Wasserstoff unterschiedlicher Reaktivität enthalten und von (E) verschieden sind,
         sowie gegebenenfalls
      (G) Verbindungen, die von (B), (C), (D), (E) und (F) verschieden sind und mindestens zwei, mit NCO-Gruppen reaktive Gruppen enthalten.

Weiterhin Gegenstand der Erfindung ist ein Verfahren zur Darstellung dieser Überzugsmasse sowie deren Verwendung als Beschichtungsmittel.

Bei der Polyisocyanatkomponente a) handelt es sich um nicht hydrophil modifizierte, ansonsten beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente a) weist bei 23 °C im allgemeinen eine Viskosität von 50 bis 20 000 mPa.s auf. Besonders bevorzugt handelt es sich bei der Polyisocyanatkomponente a) um Polyisocyanate oder Polyisocyanatgemische mit ausschließlich aliphatisch und/oder cycloaliphatisch gebundenen Isocyanatgruppen einer zwischen 2,0 und 5,0 liegenden (mittleren) NCO-Funktionalität.

Falls erforderlich können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch im allgemeinen so bemessen, daß in den letztendlich erhaltenen erfindungsgemäßen Beschichtungsmitteln maximal 30 Gew.-% Lösungsmittel vorliegt, wobei auch das gegebenenfalls in den Polymerdispersionen oder -lösungen noch vorliegende Lösungsmittel mit in die Berechnung eingeht. Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Als Komponente a) geeignete Polyisocyanate sind Diisocyanate und insbesondere die sogenannten "Lackpolyisocyanate" mit aromatisch oder (cyclo)aliphatisch gebundenen Isocyanatgruppen, wobei die letztgenannten aliphatischen Polyisocyanate, besonders bevorzugt sind.

Bei den geeigneten Diisocyanaten handelt es sich um die auf dem Polyurethan- bzw. Lackgebiet bekannten Verbindungen, wie aliphatische, cycloaliphatische oder aromatische Diisocyanate. Diese besitzen vorzugsweise die Formel Q(NCO)₂, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), p-Xylylendiisocyanat und a,a,a',a'-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-Offenlegungsschrift 29 28 552 verwiesen.

Sehr gut geeignet sind beispielsweise "Lackpolyisocyanate" auf Basis von Hexamethylendiisocyanat oder von 1-Isocyanato-3,3,5-trimethyl-4-isocyanatomethylcyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung bei Bedarf in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen auf N,N,N-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphanen entstehen. Besonders bevorzugt sind die zuletzt genannten Gemische einer Viskosität bei 23 °C von 50 bis 20 000 mPa.s und einer zwischen 2,0 und 5,0 liegenden NCO- Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beipielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und eventuell anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die eventuell im Anschluß an ihre Herstellung vorzugsweise destillativ von überschüssigen monomeren Diisocyanaten befreit worden sind.

Die Polyisocyanatkomponente a) kann im übrigen aus beliebigen Gemischen der beispielhaft genannten Polyisocyanate bestehen.

Das Polyurethanharz b) besitzt im allgemeinen eine zahlenmittlere molare Masse Mₙ (aus der Stöchiometrie des Ausgangsmaterials berechnet) von 1600 bis 50000 g/mol, vorzugsweise 1600 bis 10000 g/mol und insbesondere 2000 bis 6000 g/mol, eine Säurezahl von 10 bis 80 mg/g, vorzugsweise 25 bis 60 mg/g und eine Hydroxylzahl von 30 bis 200 mg/g, vorzugsweise 35 bis 100 mg/g. Es ist zumindest im alkalischen Milieu wasserdispergierbar und bei niedrigen Molekulargewichten unter diesen Bedingungen häufig sogar wasserlöslich. Die Säurezahl gibt die Masse an Kaliumhydroxid an, die zur Neutralisation einer gegebenen Masse an Harz in fester Form benötigt wird. Die Hydroxylzahl gibt die Masse an Kaliumhydroxid an, die gleich viele Hydroxylgruppen aufweist wie eine gegebene Masse an Harz in fester Form. Im allgemeinen sind die Molekülketten dieses Polyurethanharzes überwiegend linear aufgebaut, jedoch kann in manchen Fällen ein geringfügiger Verzweigungsgrad von vorzugsweise bis zu 30 %, insbesondere bis zu 10 % vorhanden sein. Der Gelanteil liegt im allgemeinen bei kleiner als 5 Gew.-%, vorzugsweise kleiner als 1 Gew.-%. Im statistischen Mittel enthält jede Polymerkette vorzugsweise mindestens zwei, insbesondere 4 bis 6 Gruppen mit aktivem Wasserstoff, wie Amino- und/oder OH-Gruppen.

Als Polyisocyanate (A) für den Aufbau der Polyurethanharze b) kommen die gleichen Verbindungen infrage wie zuvor bei der Komponente a) beschrieben, vorzugsweise die dort genannten Diisocyanate.

Der Anteil an Polyisocyanaten (A) in dem Polyurethanharz liegt in der Regel bei ca. 10 bis 50 Gew.-%, vorzugsweise 20 bis 35 Gew.-%, bezogen auf das Polyurethanharz.

Die Polyole gemäß (B) besitzen vorzugsweise eine zahlenmittlere molare Masse Mₙ von 400 bis 5000 g/mol, insbesondere 800 bis 2000 g/mol. Ihre Hydroxylzahl beträgt im allgemeinen 30 bis 280 mg/g, vorzugsweise 50 bis 200 mg/g und insbesondere 70 bis 160 mg/g.

Beispiele für derartige Polyole, bei denen es sich um die aus der Polyurethanchemie bekannten Verbindungen handelt, sind Polyetherpolyole, Polyesterpolyole, Polycarbonatpolyole, Polyesteramidpolyole, Polyamidopolyole, Epoxidharzpolyole und deren Umsetzungsprodukte mit CO₂, Polyacrylatpolyole udgl.. Derartige Polyole, die auch in Mischung eingesetzt werden können, sind beispielsweise in den DE-Offenlegungsschriften 20 20 905, 23 14 513 und 31 24 784 sowie in der EP-Offenlegungsschrift 120 466 beschrieben.

Von diesen Polyolen sind die Polyether- und Polyesterpolyole bevorzugt, insbesondere solche, die nur endständige OH-Gruppen aufweisen und eine Funktionalität von kleiner als 3, vorzugsweise von 2,8 bis 2 und insbesondere von 2 besitzen.

Als Polyetherpolyole sind hier beispielsweise Polyoxyethylenpolyole, Polyoxypropylenpolyole, Polyoxybutylenpolyole zu nennen und vorzugsweise Polyurethanhydrofurane mit endständigen OH-Gruppen.

Die erfindungsgemäß besonders bevorzugten Polyesterpolyole sind die bekannten Polykondensate aus Di- sowie gegebenenfalls Poly(Tri, Tetra)olen und Di- sowie gegebenenfalls Poly(Tri, Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole, wie Polyethylenglykol, weiterhin Propandiol, Butandiol(1,4), Hexandiol(1,6), Neopentylglykol oder Hydroxypivalinsäureneopentylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Trimethylolbenzol oder Trishydroxyethylisocyanurat zu nennen.

Als Dicarbonsäuren geeignet sind aromatische und cycloaliphatische Dicarbonsäuren sowie Alkyl- und Alkenyl-Dicarbonsäuren sowie Dimerfettsäuren. Es kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, "Chlorendic"-Säure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure, Octenylbernsteinsäure und Dodecenylbernsteinsäure. Anhydride dieser Säuren sind ebenfalls brauchbar, soweit sie existieren. Die Anhydride werden infolgedessen durch den Ausdruck "Säure" mitumfaßt. Es können auch Monocarbonsäuren, wie Benzoesäure und Hexancarbonsäure verwendet werden. Gesättigte aliphatische oder aromatische Säuren sind bevorzugt, wie Adipinsäure oder Isophthalsäure. Als gegebenenfalls in kleineren Mengen mitzuverwendende Polycarbonsäure seien hier Trimellitsäure, sowie Polyanhydride, wie in DE 28 11 913 beschrieben, oder Mischungen zweier oder mehrerer solcher Verbindungen genannt.

Die Hydroxycarbonsäuren, die als Reaktionsteilnehmer bei der Herstellung eines Polyesterpolyols mit endständigem Hydroxyl verwendet werden können, sind u.a. beispielsweise Hydroxycapronsäure, Hydroxybuttersäure, Hydroxydecansäure, Hydroxystearinsäure und dergl.. Brauchbare Lactone sind u.a. Caprolacton, Butyrolacton und dergl..

Die Menge an Komponente (B) in dem Polyurethanharz liegt üblicherweise zwischen 15 und 80 Gew.-%, vorzugsweise 40 und 60 Gew.-%, bezogen auf das Polyurethanharz.

Die gegebenenfalls zum Aufbau der Polyurethanharze eingesetzten niedermolekularen Polyole (C) bewirken in der Regel eine Versteifung der Polymerkette. Sie besitzen im allgemeinen eine molare Masse von 60 bis 400 g/mol, vorzugsweise 60 bis 200 g/mol und Hydroxylzahlen von beispielsweise 200 bis 1500 mg/g. Sie können aliphatische, alicyclische oder aromatische Gruppen enthalten. Ihre Menge liegt im allgemeinen bei 0 bis 20, vorzugsweise 1 bis 10 Gew.-%, bezogen auf die Polyolkomponenten (B) bis (D). Genannt seien hier beispielsweise die niedermolekularen Polyole mit bis zu etwa 20 Kohlenstoffatomen je Molekül, z.B. Ethylenglykol, Diethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Bisphenol A (2,2-Bis(4-hydroxyphenyl)propan), hydriertes Bisphenol A (2,2-Bis(4-hydroxycyclohexyl)propan) sowie deren Mischungen, sowie als Triol, Trimethylolpropan.

Für den Baustein (D) geeignete Verbindungen sind beispielsweise in den US-Patentschriften 34 12 054 und 36 40 924 sowie in den DE-Offenlegungsschriften 26 24 442 und 27 44 544 beschrieben, auf die hier Bezug genommen wird. Insbesondere kommen hierfür solche Polyole, vorzugsweise Diole, in Frage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen geeignet. Beispiele hierfür sind: Dihydroxycarbonsäuren, wie α,α-Dialkylolalkansäuren, insbesondere α,α-Dimethylolalkansäure, wie 2,2-Dimethylolessigsäure, 2,2-Dimethylolpropionsäure, 2,2-Dimethylolbuttersäure, 2,2-Dimethylolpentansäure, Weinsäuren, weiterhin Polyhydroxysäure, wie Glukonsäure. Besonders bevorzugt ist dabei 2,2-Dimethylolpropionsäure. Aminogruppenhaltige Verbindungen (D) sind beispielsweise α,δ-Diaminovaleriansäure, 2,4-Diamino-toluol-sulfonsäure-(5) udgl. Es können auch Gemische dieser Verbindungen (D) zum Einsatz kommen. Die Menge an Komponente (D) in dem Polyurethanharz liegt im allgemeinen bei 2 bis 20, vorzugsweise bei 4 bis 10 Gew.-%, bezogen auf das Polyurethanharz.

Das erfindungsgemäß eingesetzte Polyurethanharz kann weiterhin auch Bausteine (E) enthalten, die sich überwiegend, vorzugsweise zu 70 bis 90 %, jeweils an den Kettenenden befinden und diese abschließen (Kettenstopper). Als Polyole kommen hier solche in Betracht, die mindestens drei, vorzugsweise 3 oder 4 Hydroxylgruppen aufweisen. Genannt seien hier beispielsweise Glycerin, Hexantriol, Pentaerythrit und Trimethylolpropan, wobei letzteres bevorzugt ist. Um als Kettenstopper wirken zu können wird die Komponente (E) im Überschuß, bezogen auf die vorhandenen Isocyanatgruppen, eingesetzt. Die Menge an (E) liegt üblicherweise zwischen 2 und 15, vorzugsweise 5 bis 15 Gew.-%, bezogen auf das Polyurethanharz. Gegebenenfalls finden sich diese Bausteine (E) in Mischung mit den Bausteinen (F) und/oder (G) im Polyurethanharz.

Die Bausteine (F) leiten sich zum einen von monofunktionellen, mit NCO-Gruppen reaktiven Verbindungen ab, wie Monoaminen, insbesondere mono-sekundären Aminen, oder Monoalkoholen. Genannt seien hier beispielsweise: Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignet substituierte Derivate davon, Amidamine aus di-primären Aminen und Monocarbonsäuren, Monoketimine von di-primären Aminen, primär/tertiäre Amine, wie N,N-Dimethylaminopropylamin udgl..

Vorzugsweise kommen für (F) Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen, oder neben einer OH-Gruppe auch COOH-Gruppen oder neben einer Aminogruppe (primär oder sekundär) auch OH-Gruppen aufweisen, wobei die letzteren bevorzugt sind. Beispiele hierfür sind: primäre/sekundäre Amine, wie 3-Amino-1-Methylaminopropan, 3-Amino-1-Ethylaminopropan, 3-Amino-1-Cyclohexylaminopropan, 3-Amino-1-Methylaminobutan; Mono-Hydroxycarbonsäuren, wie Hydroxyessigsäure, Milchsäure oder Äpfelsäure, weiterhin Alkanolamine wie N-Aminoethylethanolamin, Ethanolamin, 3-Aminopropanol, Neopentanolamin und besonders bevorzugt Diethanolamin.

Auf diese Weise werden zusätzlich funktionelle Gruppen in das polymere Endprodukt eingebracht und dieses damit reaktionsfähiger gegenüber Materialien, wie Härtern, gemacht. Die Menge an (F) in dem Polyurethanharz liegt üblicherweise zwischen 2 und 20, vorzugsweise 3 und 10 Gew.-%, bezogen auf das Polyurethanharz.

Das erfindungsgemäße Polyurethanharz kann gegebenenfalls geringe Mengen der Bausteine (G) enthalten, die sich von sogenannten Kettenverlängerern ableiten. Als solche kommen die hierfür bekannten, mit NCO-Gruppen reaktiven und vorzugsweise difunktionellen Verbindungen in Frage, die nicht identisch mit (B), (C), (D), (E) und (F) sind und zumeist mittlere Molekulargewichte bis zu 400 aufweisen. Genannt seien hier beispielsweise Wasser, Hydrazin, Poly(Di)amine, wie Ethylendiamin, Diaminopropan, Hexamethylendiamin, die auch Substituenten, wie OH-Gruppen, tragen können. Solche Polyamine sind beispielsweise in der DE-Offenlegungsschrift 36 44 371 beschrieben. Die Menge an (G) in dem Polyurethanharz liegt üblicherweise zwischen 1 und 10, vorzugsweise 2 und 5 Gew.-%, bezogen auf das Polyurethanharz.

Die Herstellung des erfindungsgemäß eingesetzten Polyurethanharzes erfolgt bevorzugt in der Weise, daß man aus den Polyisocyanaten gemäß (A), den Polyolen gemäß (B) und gegebenenfalls den niedermolekularen Polyolen gemäß (C) sowie den Verbindungen gemäß (D) zunächst ein Polyurethan-Präpolymeres herstellt, das im Mittel mindestens 1,7, vorzugsweise 2 bis 2,5 freie Isocyanatgruppen pro Molekül enthält, dieses Präpolymere dann mit den Verbindungen (E) und/oder (F) gegebenenfalls in Abmischung mit geringen Mengen an (G), in nicht-wäßrigem System umsetzt, wobei die Komponente (E) im stöchiometrischen Überschuß eingesetzt wird, und das vollständig ausreagierte Polyurethanharz vorzugsweise abschließend neutralisiert und ins wäßrige System überführt. Gegebenenfalls kann auch die Umsetzung mit (G) nach der Überführung ins wäßrige System erfolgen.

Die Herstellung des Polyurethan-Präpolymeren erfolgt dabei nach bekannten Verfahren. Hierbei wird das Polyisocyanat gegenüber den Polyolen (B) bis (D) im Überschuß eingesetzt, so daß ein Produkt mit freien Isocyanatgruppen resultiert. Diese Isocyanatgruppen sind end- und/oder seitenständig, vorzugsweise endständig. Zweckmäßigerweise ist dabei die Menge an Polyisocyanat so groß, daß das Äquivalentverhältnis von Isocyanatgruppen zur Gesamtzahl der OH-Gruppen in den Polyolen (B) bis (D) 1,05 bis 1,4, vorzugsweise 1,1 bis 1,3 beträgt.

Die Umsetzung zur Herstellung des Präpolymeren wird normalerweise bei Temperaturen von 60 bis 95 °C, vorzugsweise 60 bis 75 °C, je nach Reaktivität des eingesetzten Isocyanats, durchgeführt, in der Regel ohne Anwesenheit eines Katalysators, jedoch vorzugsweise in Gegenwart von gegenüber Isocyanaten inaktiven Lösungsmitteln. Hierfür kommen insbesondere solche Lösungsmittel in Betracht, die mit Wasser verträglich sind, wie die weiter unten genannten Ether, Ketone und Ester sowie N-Methylpyrrolidon. Die Menge dieses Lösungsmittels überschreitet zweckmäßigerweise nicht 20 Gew.-%, und liegt vorzugsweise im Bereich von 5 bis 15 Gew.-%, jeweils bezogen auf die Summe aus Polyurethanharz und Lösungsmittel. Zweckmäßigerweise wird dabei das Polyisocyanat der Lösung der übrigen Komponenten zugegeben. Es besteht jedoch ebenfalls die Möglichkeit, zunächst das Polyisocyanat zu dem Polyol (B) und gegebenenfalls (C) zuzugeben und das so erzeugte Präpolymer mit der Komponente (D), die in einem gegenüber Isocyanaten inaktiven Lösungsmittel, vorzugsweise N-Methylpyrrolidon oder Ketone, gelöst ist, umzusetzen.

Das Präpolymere bzw. dessen Lösung wird dann mit Verbindungen gemäß (E) und/oder (F), gegebenenfalls in Abmischung mit (G), umgesetzt, wobei die Temperatur zweckmäßigerweise im Bereich von 50 bis 110 °C, vorzugsweise zwischen 70 und 110 °C liegt, bis der NCO-Gehalt in dem Präpolymeren praktisch auf Null abgesunken ist. Falls die Verbindung (E) eingesetzt wird, so wird diese im Überschuß zugegeben. Die Menge an (E) liegt dabei zweckmäßigerweise so, daß das Äquivalentverhältnis von NCO-Gruppen des vorher gegebenenfalls schon mit Verbindungen gemäß (F) und/oder (G) umgesetzten Präpolymeren zu reaktiven Gruppen von (E) 1:1,1 bis 1:5, vorzugsweise 1:1,5 bis 1:3 beträgt. Die Menge an (F) und/oder (G) kann dabei 0 bis 90 %, vorzugsweise 0 bis 20 %, bezogen auf (E) betragen.

Ein Teil der (nicht neutralisierten) COOH-Gruppen, vorzugsweise 5 bis 30 %, kann gegebenenfalls mit difunktionellen mit COOH-Gruppen reaktiven Verbindungen, wie Diepoxyden, umgesetzt werden.

Zur Neutralisation des resultierenden, vorzugsweise COOH-Gruppen enthaltenden Produktes sind insbesondere tertiäre Amine geeignet, z.B. Trialkylamine mit 1 bis 12, vorzugsweise 1 bis 6 C-Atomen in jedem Alkylrest. Beispiele hierfür sind Trimethylamin, Triethylamin, Methyldiethylamin, Tripropylamin. Die Alkylreste können beispielsweise auch Hydroxylgruppen tragen, wie bei den Dialkylmonoalkanol-, Alkyldialkanol- und Trialkanolaminen. Beispiel hierfür ist Dimethylethanolamin, das bevorzugt als Neutralisationsmittel dient.

Als Neutralisationsmittel sind gegebenenfalls auch anorganische Basen, wie Ammoniak oder Natrium- bzw. Kaliumhydroxid einsetzbar.

Das Neutralisationsmittel wird zumeist im Molverhältnis zu den COOH-Gruppen des Präpolymeren von ca. 0,3:1 bis 1,3:1, vorzugsweise von ca. 0,5:1 bis 1:1 eingesetzt.

Die Neutralisation, die in der Regel zwischen Raumtemperatur und 110 °C erfolgt, kann in beliebiger Weise durchgeführt werden, z.B. so, daß das wasserhaltige Neutralisationsmittel dem Polyurethanharz zugegeben wird oder umgekehrt. Es ist aber auch möglich, daß man zuerst das Neutralisationsmittel dem Polyurethanharz zufügt und danach erst das Wasser. Im allgemeinen erhält man so Festkörpergehalte von 20 bis 70 %, bevorzugt 30 bis 50 %.

Der Gehalt an Polyurethanharz in der wäßrigen Überzugsmasse beträgt im allgemeinen 5 bis 40, vorzugsweise 15 bis 30 Gew.-%, bezogen auf die gesamte Überzugsmasse.

Neben dem Polyurethanharz kann die wäßrige Überzugsmasse als Bindemittel noch bis zu 60, vorzugsweise bis zu 30 Gew.-%, bezogen auf das Polyurethanharz, anderer oligomerer oder polymerer Materialien enthalten, wie vernetzungsfähige, wasserlösliche oder wasserdispergierbare Phenolharze, Polyesterharze, Epoxidharze oder Acrylharze etc., wie beispielsweise in der EP-Offenlegungsschrift 89 497 beschrieben.

Außerdem kann in der erfindungsgemäßen Überzugsmasse überschüssiges Polyol entsprechend (E) vorhanden sein, zumeist in Mengen von 1 bis 10, vorzugsweise 2 bis 5 Gew.-%, bezogen auf das Polyurethanharz.

Zur Herstellung der gebrauchsfertigen Beschichtungsmittel wird die Polyisocyanatkomponente a) in der wäßrigen Dispersion/Lösung des Polyurethanharzes b) emulgiert, wobei das gelöste oder dispergierte Polyurethanharz die Funktion eines Emulgators für das zugesetzte Polyisocyanat a) übernimmt.

Die Durchmischung kann durch einfaches Verrühren bei Raumtemperatur erfolgen. Die Menge der Polyisocyanatkomponente wird dabei so bemessen, daß ein NCO/OH-Äquivalentverhältnis, bezogen auf die Isocyanatgruppen der Komponente a) und die alkoholischen Hydroxylgruppen der Komponente b) von 0,5:1 bis 5:1, vorzugsweise 0,8:1 bis 3:1 resultiert.

Vor der Zugabe der Polyisocyanatkomponente a) können dem Polyurethanharz b), d.h. der Dispersion bzw. Lösung der Polymeren die üblichen Hilfs- und Zusatzmittel der Lacktechnologie einverleibt werden. Hierzu gehören zum Beispiel Entschäumungsmittel, Verlaufshilfsmittel, Pigmente und Dispergierhilfsmittel für die Pigmentverteilung.

Die so erhaltenen erfindungsgemäßen Überzugsmittel eignen sich für praktisch alle Einsatzgebiete, in denen heute lösemittelhaltige, lösemittelfreie oder andersartige wäßrige Anstrich- und Beschichtungssysteme mit einem erhöhten Eigenschaftsprofil Verwendung finden, wobei die zu beschichtenden Substrate zum Beispiel aus Metall, mineralischen Baustoffen, wie Kalk, Zement oder Gips, Faser-Zement-Baustoffe, Beton, Holz oder Holzwerkstoffen, Papier, Asphalt, Bitumen, Kunststoffen diverser Art, Textilien oder Leder bestehen können. Bei den metallenen Substraten handelt es sich in allen Fällen bevorzugt um Automobile.

### Herstellung der Bindemittel

### Beispiel A

Aus 282,8 g eines Polyesters mit dem Molekulargewicht von 1020, hergestellt aus Adipinsäure, Hexandiol(1,6) und Neopentylglykol, sowie 42,9 g Dimethylolpropionsäure und 75 g N-Methylpyrrolidon wurde eine Mischung hergestellt und diese auf 100 °C erhitzt. Die so erhaltene, klare Lösung wurde auf ca. 60 °C abgekühlt und anschließend bei dieser Temperatur 121,8 g eines Gemisches aus 2,4- und 2,6-Toluylendiisocyanat so zugetropft, daß die Temperatur 65 bis 70 °C nicht überstieg. Anschließend wurde so lange bei dieser Temperatur gerührt, bis der Isocyanat-Wert 1,6 % (= 2 Isocyanatgruppen pro Molekül) erreicht hatte. Dann wurden 21,0 g Diethanolamin zugegeben, wobei die Schmelze gut rührbar blieb. Nach Neutralisation mit 22,4 g Diethylethanolamin wurde das fertige Polyurethanharz durch Zugabe von 625 g deionisiertem Wasser dispergiert. Man erhielt eine klare, ca. 40 %-ige Dispersion mit einer Viskosität von 1050 mPas.

### Beispiel B

317,1 g eines Polyesters mit dem Molekulargewicht von 1130, hergestellt aus Adipinsäure, Hexandiol, Neopentylglykol und Terephthalsäure wurden mit 42,9 g Dimethylolpropionsäure und 90 g N-Methylpyrrolidon gemischt und auf 100 °C erhitzt. Nach Abkühlen auf 65 °C wurden 183,7 g 4,4'-Diisocyanatodicyclohexylmethan (Desmodur^{(R)} W) zugetropft und der Reaktionsansatz anschließend bei 60 °C gehalten, bis der berechnete Isocyanat-Wert von 1,33 % (= 2 Isocyanatgruppen pro Molekül) erreicht war. Man gab 80,4 g Trimethylolpropan und anschließend 22,8 g Dimethylethanolamin zu und rührte noch 20 min nach. Dann wurde durch Zugabe von 700 g deionisiertem Wasser das Polyurethanharz dispergiert.

### Beispiel C

235,6 g eines Polyesters mit der Molmasse von 1020, hergestellt aus Adipinsäure, Hexandiol(1,6) und Neopentylglykol wurden mit 56,0 g Polytetrahydrofuran (M=1000), 42,9 g Dimethylolpropionsäure und 75 g N-Methylpyrrolidon gemischt und auf die in Beispiel 1 beschriebene Weise mit Toluylendiisocyanat (Isomerengemisch) umgesetzt. Nach Reaktion des Prepolymeren mit Glycerin wurde mit 22,8 g Dimethylethanolamin neutralisiert und mit 620 g deionisiertem Wasser dispergiert.

### Beispiel D

317,1 g eines Polyesters mit dem Molekulargewicht von 1130, hergestellt aus Adipinsäure, Hexandiol, Neopentylglykol und Terephthalsäure wurden mit 42,9 g Dimethylolpropionsäure und 90 g N-Methylpyrrolidon gemischt und auf 100 °C erhitzt. Nach Abkühlen auf 65 °C wurden 183,7 g 4,4'-Diisocyanatodicyclohexylmethan (Desmodur^{(R)} W) zugetropft und der Reaktionsansatz anschließend bei 80 °C gehalten, bis der berechnete Isocyanat-Wert von 1,33 % (= 2 Isocyanatgruppen pro Molekül) erreicht war. Man gab 21,0 g Diethanolamin und anschließend 22,8 g Dimethylethanolamin zu und rührte noch 20 min nach. Dann wurde durch Zugabe von 700 g deionisiertem Wasser das Polyurethanharz dispergiert.

### 2K-Grundierung

Zur Herstellung des Dispergieransatzes werden 62,6 Gew.-Teile des Polyurethans (A), (B) oder (C) mit einem Festkörpergehalt von 40,0 Gew.-% mit 2,4 Gew.-Teilen deionisiertem Wasser; 0,2 Gew.-Teilen eines handelsüblichen, siliconfreien Entschäumers (Additol VXW 4973 der Hoechst AG); 0,3 Gew.-Teilen eines handelsüblichen Dispergierhilfsmittels (Additol XL 250 der Hoechst AG) und 0,4 Gew.-Teile eines handelsüblichen Verlaufsmittels (Additol XW 390 der Hoechst AG) vermischt. Nach dem einfachen Unterrühren der Additive werden 14,2 Gew.-Teile Titandioxid (Kronos 2310 der Kronos-Titan GmbH); 11,6 Gew.-Teile eines Bariumsulfates (Blanc fixe micro der Sachtleben GmbH); 3,8 Gew.-Teile eines Talkums (Naintsch E 7 der Naintsch Mineralwerke GmbH) und 0,1 Gew.-Teil eines Rußes (Flammruß 101 der Degussa AG) dem Ansatz zugegeben und ca. 30 Minuten unter einem Dissolver bei einer Drehzahl von 6000 U/min dispergiert.

Der Dispergieransatz wird nun mit 12,5 Gew.-Teilen eines handelsüblichen Polyisocyanates (Desmodur N100 oder Desmodur N3300 der Bayer AG) vermischt und setzt sich erfindungsgemäß wie folgt zusammen:

| | Beisp. 1 | Beisp. 2 | Beisp. 3 |
|---|---|---|---|
| Bindemittel | A | B | C |
| | | | |
| | 25,04 | 25,04 | 25,04 |
| Pigment | 29,70 | 29,70 | 29,70 |
| Hilfsmittel | 0,55 | 0,55 | 0,55 |
| Gesamtfestkörper | 55,29 | 55,29 | 55,29 |
| Wasser, deionisiert | 39,98 | 40,20 | 40,79 |
| Org. Lösemittel | 4,73 | 4,51 | 3,92 |
| Gesamt | 100,00 | 100,00 | 100,00 |

Die verarbeitungsfähigen Ansätze haben einen Anteil an organischen Lösemitteln von nur 3,92 bis 4,73 Gew.-%. Die Lacke werden mit einer Naßfilmschicht von 150 - 300 µm (entsprechend einer Trockenschichtstärke von 25 bis 50 µm) auf den Untergrund appliziert und 30 Minuten bei 80 °C im Umluftofen getrocknet. Der Härtungsprozeß ist nach 7 bis 14 Tagen abgeschlossen.

Die gehärteten Filme der Beispiele 1 bis 3 können wie folgt charakterisiert werden:

| Lösemittelbeständigkeit | Beisp. 1 | Beisp. 2 | Beisp. 3 |
|---|---|---|---|
| Isopropanol | gut | gut | gut |
| Isopropanol/Wasser (1:1) | gut | gut | mäßig-gut |
| Ethanol | sehr gut | gut | gut |
| Ethanol/Wasser (1:1) | sehr gut | sehr gut | mäßig-gut |
| Superbenzin | gut | gut | sehr gut |
| Wasser | gut | sehr gut | gut |

| | Beisp. 1 | Beisp. 2 | Beisp. 3 |
|---|---|---|---|
| Pendelhärte | | | |
| gem.DIN 53157 | 50"-75" | 81"-110" | 80"-100" |
| Glanz 60° | | | |
| gem DIN 67530 | 83 % | 80 % | 85 % |
| Tropentest | | | |
| gem DIN 50017 SK | gut | sehr gut | gut |
| Salzsprühtest | | | |
| gem. ASTM-B117-69 | gut | sehr gut | gut |
| Decklackstand | gut-mäßig | gut-mäßig | sehr gut |
| Steinschlag/Haftung | gut | gut | gut |
| /Durchschläge | sehr gut | sehr gut | sehr gut |

### 2K-Decklack

Zur Herstellung des Dispergieransatzes werden 67,6 Gew.-Teile des Polyurethans (B), oder (D) mit einem Festkörpergehalt von 40,0 Gew.-% mit 2,9 Gew.-Teilen deionisiertem Wasser; 0,2 Gew.-Teilen eines handelsüblichen, siliconfreien Entschäumers (Additol VXW 4973 der Hoechst AG); 0,3 Gew.-Teilen eines handelsüblichen Dispergierhilfsmittels (Additol XL 250 der Hoechst AG) und 0,4 Gew.-Teile eines handelsüblichen Verlaufsmittels (Additol XW 390 der Hoechst AG) vermischt. Nach dem einfachen Unterrühren der Additive werden 24,6 Gew.-Teile Titandioxid (Kronos 2310 der Kronos-Titan GmbH) dem Ansatz zugegeben und ca. 30 Minuten unter einem Dissolver bei einer Drehzahl von 6000 U/min dispergiert.

Der Dispergieransatz wird nun mit 13,4 Gew.-Teilen eines handelsüblichen Polyisocyanates (Desmodur N100 oder Desmodur N3300 der Bayer AG) vermischt und setzt sich erfindungsgemäß wie folgt zusammen:

| Beisp.4/Beisp.5 | Beisp. 4 | Beisp. 5 |
|---|---|---|
| Bindemittel | D | B |
| | | |
| | 26,88 | 26,88 |
| Pigment | 24,60 | 24,60 |
| Hilfsmittel | 0,55 | 0,55 |
| Gesamtfestkörper | 52,03 | 52,03 |
| Wasser, deionisiert | 43,25 | 43,25 |
| Org. Lösemittel | 4,72 | 4,72 |
| Gesamt | 100,00 | 100,00 |

Die verarbeitungsfertigen Ansätze haben einen Anteil an organischen Lösemitteln von nur 4,72 Gew-%. Die Lacke werden mit einer Naßfilmschicht von 200 - 400 µm (entsprechend einer Trockenschichtstärke von 30 bis 60 µm) auf den Untergrund appliziert und 30 Minuten bei 80 °C im Umluftofen getrocknet. Der Härtungsprozeß ist nach 7 bis 14 Tagen abgeschlossen.

Die gehärteten Filme der Beispiele 4 bis 5 können wie folgt charakterisiert werden:

| Lösemittelbeständigkeit | Beisp. 4 | Beisp. 5 |
|---|---|---|
| Isopropanol | gut | gut |
| Isopropanol/Wasser (1:1) | gut | sehr gut |
| Ethanol | gut | gut |
| Ethanol/Wasser (1:1) | gut | sehr gut |
| Superbenzin | gut | gut |
| Wasser | gut | gut |

| | Beisp. 4 | Beisp. 5 |
|---|---|---|
| Pendelhärte | | |
| gem.DIN 53157 | 80" | 95" |
| Glanz 60° | | |
| gem DIN 67530 | 78 % | 80 % |
| Tropentest | | |
| gem DIN 50017 SK | gut | gut-sehr gut |
| Salzsprühtest | | |
| gem. ASTM-B117-69 | gut-sehr gut | sehr gut |
| Decklackstand | mäßig | gut-mäßig |
| Steinschlag/Haftung | gut-sehr gut | gut-sehr gut |
| /Durchschläge | sehr gut | sehr gut |

### 2K-Schleiffüller

Zur Herstellung des Dispergieransatzes werden 32,3 Gew.-Teile des Polyurethans (B) oder (D) mit einem Festkörpergehalt von 40,0 Gew.-% mit 19,2 Gew.-Teilen deionisiertem Wasser; 0,28 Gew.-Teilen eines handelsüblichen, siliconfreien Entschäumers (Additol VXW 4973 der Hoechst AG); 0,42 Gew.-Teilen eines handelsüblichen Dispergierhilfsmittels (Additol XL 250 der Hoechst AG) und 0,55 Gew.-Teile eines handelsüblichen Verlaufsmittels (Additol XW 390 der Hoechst AG) vermischt. Nach dem einfachen Unterrühren der Additive werden 1,4 Gew.-Teile Eisenoxid (Bayferrox 3920 von Bayer); 0,42 Gew.-Teile Aerosil (Aerosil 380 der Degussa AG); 18,4 Gew.-Teile eines handelsüblichen Titandioxides (Kronos 2310 der Kronos Titan GmbH); 17,0 Gew.-Teile eines Bariumsulfates (Blanc fixe micro von Sachtleben) und 16,22 Gew.-Teile (Koalin W von Erbslöh) dem Ansatz zugegeben und ca. 30 Minuten unter dem Dissolver bei einer Drehzahl von 6000 U/min dispergiert. Der Dispergieransatz wird nun mit 6,47 Gew.-Teilen eines handelsüblichen Polyisocyanats (Desmodur N100 oder Desmodur N3300 der Bayer AG), das vorher mit 4,83 Gew.-Teilen Butylacetat vorverdünnt wird, vermischt und setzt sich erfindungsgemäß wie folgt zusammen:

| Beisp.6/Beisp.7 | Beisp. 6 | Beisp. 7 |
|---|---|---|
| Bindemittel | B | D |
| | | |
| | 12,93 | 12,93 |
| Pigment | 53,50 | 53,50 |
| Hilfsmittel | 0,77 | 0,77 |
| Gesamtfestkörper | 67,20 | 67,20 |
| Wasser, deionisiert | 30,21 | 30,21 |
| Org. Lösemittel | 2,59 | 2,59 |
| Gesamt | 100,00 | 100,00 |

Die verarbeitungsfertigen Ansätze haben einen Anteil an organischen Lösemitteln von nur 2,59 Gew.%. Die Lacke werden mit einer Naßfilmschicht von 300 - 500 µm (entsprechend einer Trockenschichtstärke von 70 bis 120 µm) auf den Untergrund appliziert und 30 Minuten bei 80 °C im Umluftofen getrocknet. Der Härtungsprozeß ist nach 7 bis 14 Tagen abgeschlossen.

Die gehärteten Filme der Beispiele 6 bis 7 können wie folgt charakterisiert werden:

| Lösemittelbeständigkeit | Beisp. 6 | Beisp. 7 |
|---|---|---|
| Isopropanol | gut-mäßig | gut-mäßig |
| Isopropanol/Wasser (1:1) | gut-sehr gut | gut |
| Ethanol | gut | gut |
| Ethanol/Wasser (1:1) | gut | gut |
| Superbenzin | gut | gut-mäßig |
| Wasser | gut-mäßig | gut-mäßig |

| | Beisp. 6 | Beisp. 7 |
|---|---|---|
| Pendelhärte | | |
| gem.DIN 53157 | 70"-100" | 65"-85" |
| Glanz 60° | | |
| gem DIN 67530 | 2 % | 2 % |
| Tropentest | | |
| gem DIN 50017 SK | gut-sehr gut | gut |
| Salzsprühtest | | |
| gem. ASTM-B117-69 | gut-sehr gut | gut |
| Decklackstand | gut | sehr gut |
| Steinschlag/Haftung | sehr gut-gut | sehr gut-gut |
| /Durchschläge | gut | gut |

Die gehärteten Filme sämtlicher Beispiele werden nach folgenden Prüfvorschriften geprüft:
- Pendelhärte:: Gemäß DIN 53 157
- Glanzgrad:: Gemäß DIN 67 530, gemessen bei einem Winkel von 60°.
- Tropentest:: Gemäß DIN 50 017 SK. Nach 240 Stunden, bei einer Luftfeuchte von 100 % und einer Temperatur von 40 °C, wurden Blasenbildung, Glanz und die Beschaffenheit der Lackoberfläche subjektiv nach einer Notenskala beurteilt (1 = sehr gut, 5 = sehr schlecht).
- Salzsprühtest:: Gemäß ASTM-B 117-69. Nach 240 Stunden im Salznebelklima wurden die Blasenbildung und die Rostunterwanderung an den Sollroststellen subjektiv nach einer Notenskala beurteilt (1 = sehr gut; 5 = sehr schlecht).
- Decklackstand:: Glanz und Oberfläche des Decklackes wurden subjektiv nach einer Notenskala bewertet (1 = sehr gut, 5 = sehr schlecht).
- Steinschlag:: Die Steinschlagfestigkeit wurde mittels Steinschlag-Prüfgerät nach VDA (Fa. Erich-sen, Modell 508) geprüft.

Für die vorliegenden Prüfungen wurde jeweils 1 kg Stahlschrot (kantig, 4 bis 5 mm) beschleunigt durch Druckluft (2 bar) auf die Prüfbleche geschossen. Bewertet wurden, anhand von Musterblechen, die Decklackhaftung (sehr gut = keine Abplatzungen, sehr schlecht = vollständige Enthaftung) und die Durchschläge bis auf das Blech (sehr gut = keine Durchschläge, sehr schlecht = sehr viele Durchschläge).

## Patentansprüche

1. Wasserverdünnbare Zweikomponenten-Überzugsmasse, enthaltend
a) eine nicht hydrophil modifizierte Polyisocyanatkomponente bestehend aus einem oder mehreren organischen Polyisocyanaten, und
b) ein Polyurethanharz mit einer Hydroxylzahl von 30 bis 200 mg/g, dargestellt durch
1. Umsetzung von
(A) Polyisocyanaten mit
(B) Polyolen mit einer zahlenmittleren molaren Masse Mₙ von mindestens 400 g/mol,
(C) gegebenenfalls niedermolekularen Polyolen mit einer molaren Masse von 60 bis 400 g/mol und
(D) Verbindungen, die mindestens zwei gegenüber Isocyanatgruppen reaktive Gruppen und mindestens eine zur Anionenbildung befähigte Gruppe aufweisen,
zu einem freie NCO-Gruppen enthaltenden Präpolymeren und
2. Umsetzung des in Schritt 1 dargestellten Präpolymeren mit mindestens einer der Komponenten:
(E) niedermolekulare Polyole mit einer molaren Masse von 60 bis 400 g/mol und mindestens drei Hydroxylgruppen pro Molekül, die gegenüber Isocyanatgruppen keine weiteren reaktiven Gruppen tragen, wobei diese Verbindungen im Überschuß eingesetzt werden,
(F) Verbindungen, die monofunktionell sind oder aktiven Wasserstoff unterschiedlicher Reaktivität enthalten und von (E) verschieden sind,
sowie gegebenenfalls
(G) Verbindungen, die von (B), (C), (D), (E) und (F) verschieden sind und mindestens zwei, mit NCO-Gruppen reaktive Gruppen enthalten.

2. Verfahren zur Darstellung von Überzugsmassen gemäß Anspruch 1, dadurch gekennzeichnet, daß
1.
(A) nicht hydrophil modifizierte Polyisocyanate mit
(B) Polyolen mit einer zahlenmittleren molaren Masse Mₙ von mindestens 400 g/mol,
(C) gegebenenfalls niedermolekularen Polyolen mit einer molaren Masse von 60 bis 400 g/mol und
(D) Verbindungen, die mindestens zwei gegenüber Isocyanatgruppen reaktive Gruppen und mindestens eine zur Anionenbildung befähigte Gruppe aufweisen,
zu einem freie NCO-Gruppen enthaltenden Präpolymeren umgesetzt werden,
2. das in Schritt 1 erhaltene Präpolymer mit mindestens einer der Komponenten:
(E) niedermolekulare Polyole mit einer molaren Masse von 60 bis 400 g/mol und mindestens drei Hydroxylgruppen pro Molekül, die gegenüber Isocyanatgruppen keine weiteren reaktiven Gruppen tragen, wobei diese Verbindungen im Überschuß eingesetzt werden,
(F) Verbindungen, die monofunktionell sind oder aktiven Wasserstoff unterschiedlicher Reaktivität enthalten und von (E) verschieden sind,
sowie gegebenenfalls
(G) Verbindungen, die von (B), (C), (D), (E) und (F) verschieden sind und mindestens zwei, mit NCO-Gruppen reaktive Gruppen enthalten,
zu einem aktiven Wasserstoff enthaltenden Polyurethanharz umgesetzt wird,
3. dieses Polyurethanharz in Wasser dispergiert oder gelöst und gegebenenfalls mit Hilfs- und Zusatzstoffen versetzt wird und
4. in dieser Lösung oder Dispersion eine Polyisocyanatkomponente bestehend aus mindestens einem orgänischen Polyisocyanat, emulgiert wird, wobei die Mengenverhältnisse der Harz- zu der Isocyanatkomponente einem NCO/OH-Äquivalentverhältnis, bezogen auf die Isocyanatgruppen der Polyisocyanatkomponente und die eingebauten OH-Hydroxylgruppen der Harzkomponente, von 0,5 : 1 bis 5 : 1 entsprechen.

3. Verwendung von Überzugsmitteln nach Anspruch 1 zur Herstellung von Beschichtungen.

## Claims

1. A water-thinnable two-component coating preparation comprising
a) a polyisocyanate component without a hydrophilic modification, comprising one or more organic polyisocyanates, and
b) a polyurethane resin having a hydroxyl number of 30 to 200 mg/g, prepared by
1. reacting
(A) polyisocyanates with
(B) polyols having a number average molar mass Mₙ of at least 400 g/mol,
(C) optionally low molar mass polyols having a molar mass of 60 to 400 g/mol,
(D) compounds having at least two groups which are reactive toward isocyanate groups and at least one group which is capable of anion formation,
to give a prepolymer containing free NCO groups and
2. reacting the prepolymer prepared in step 1 with at least one of the components:
(E) low molecular weight polyols having a molar mass of 60 to 400 g/mol and at least three hydroxyl groups per molecule, which carry no further groups which are reactive toward isocyanate groups, these compounds being employed in excess;
(F) compounds which are monofunctional or contain active hydrogen of differing reactivity, and are different from (E),
and optionally
(G) compounds which are different from (B), (C), (D), (E) and (F) and contain at least two groups which react with NCO groups.

2. A process for preparing coating preparations as claimed in claim 1, which comprises reacting
1.
(A) polyisocyanates without hydrophilic modification with
(B) polyols having a number average molar mass Mₙ of at least 400,
(C) optionally low molar mass polyols having a molar mass of 60 to 400 g/mol, and
(D) compounds having at least two groups which are reactive toward isocyanate groups and at least one group which is capable of anion formation,
to give a prepolymer containing free NCO groups and
2. reacting the prepolymer obtained in step 1 with at least one of the components:
(E) low molar mass polyols having a molar mass of 60 to 400 g/mol and at least three hydroxyl groups per molecule, which carry no further groups which are reactive toward isocyanate groups, these compounds being employed in excess;
(F) compounds which are monofunctional or contain active hydrogen of differing reactivity, and are different from (E), and optionally
(G) compounds which are different from (B), (C), (D), (E) and (F) and contain at least two groups which react with NCO groups,
to give a polyurethane resin containing active hydrogen,
3. dispersing or dissolving this polyurethane resin in water and optionally adding auxiliaries and additives to it, and
4. emulsifying in this solution or dispersion a polyisocyanate component composed of at least one organic polyisocyanate, the quantity ratios of the resin to the isocyanate component corresponding to a ratio of equivalents of NCO to OH, based on the isocyanate groups of the polyisocyanate component and the incorporated OH hydroxyl groups of the resin component, of from 0.5 : 1 to 5 : 1.

3. The use of a coating composition as claimed in claim 1 for production of coatings.

## Revendications

1. Masse d'enduit à deux composants diluables par l'eau, contenant
a) un composant polyisocyanato sans modification hydrophile composé d'un ou plusieurs polyisocyanates organiques, et
b) une résine polyuréthanne ayant un indice d'hydroxyle de 30 à 200 mg/g, préparée par
1. réaction
(A) de polyisocyanates avec
(B) des polyols avec une masse moléculaire moyenne en nombre Mₙ d'au moins 400 g/mole,
(C) éventuellement de polyols de bas poids moléculaire avec une masse moléculaire de 60 à 400 g/mole, et
(D) des composés qui présentent au moins deux groupes réactifs vis-à-vis des groupes isocyanato et au moins un groupe apte à la formation d'anions,
pour obtenir un prépolymère contenant des groupes NCO libres et
2. réaction du prépolymère préparé dans l'étape (1) avec au moins un des composants
(E) des polyols de bas poids moléculaire ayant une masse moléculaire de 60 à 400 g/mole et au moins trois groupes hydroxyles par molécule, qui ne portent pas d'autres groupes réactifs vis-à-vis des groupes isocyanato, en utilisant ces composés en excès,
(F) des composés qui sont monofonctionnels ou qui contiennent des atomes d'hydrogène actifs à réactivité différente et qui sont différents de (E),
ainsi qu'éventuellement,
(G) des composés qui sont différents de (B), (C), (D), (E) et (F) et qui contiennent au moins deux groupes réactifs avec des groupes NCO.

2. Procédé pour préparer les masses d'enduit selon la revendication 1, caractérisé en ce que l'on fait réagir
1.
(A) des polyisocyanates sans modification, hydrophile avec
(B) des polyols ayant un poids moléculaire moyen en nombre Mₙ d'au moins 400 g/mole,
(C) éventuellement de polyols de bas poids moléculaire ayant un poids de 60 à 400 g/mole, et
(D) des composés qui présentent au moins deux groupes réactifs vis-à-vis des groupes. isocyanato et au moins un groupe apte à former des anions,
pour obtenir des prépolymères contenant des groupes NCO libres,
2. le prépolymère obtenu à l'étape (1) avec au moins un des composants
(E) polyols de bas poids moléculaire ayant une masse moléculaire de 60 à 400 g/mole et au moins trois groupes hydroxyles par molécule, qui ne portent pas des groupes réactifs vis-à-vis des groupes isocyanato, ces composés pouvant être utilisés en excès,
(F) des composés qui sont monofonctionnels ou qui contiennent des atomes d'hydrogène ayant des réactivités différentes et qui sont différents de (E),
ainsi qu'éventuellement,
(G) des composés qui sont différents de (B), (C), (D), (E) et (F) et qui contiennent au moins deux groupes réactifs avec des groupes NCO,
3. on disperse ou on dissout cette résine polyuréthanne dans l'eau et on lui ajoute éventuellement des adjuvants et des additifs, et
4. on émulsionne dans cette solution ou dispersion un composant de polyisocyanate composé d'au moins un polyisocyanate organique, le rapport quantitatif du composant résine au composant isocyanato correspondant à un rapport d'équivalent NCO/OH par rapport au groupe isocyanato du composant isocyanato et des groupes hydroxyles incorporés de la résine et de 0,5:1 à 5:1.

3. Utilisation des agents d'enduit selon la revendication 1 pour la préparation de revêtements.
